# FASCICULE DE BREVET EUROPEEN

(11) **EP 3 274 237 B1**
(45) Date de publication et mention de la délivrance du brevet: **18.05.2022**
(21) Numéro de dépôt: 16714500.2
(22) Date de dépôt: 24.03.2016
(51) Int. Cl.: B32B 17/10, B61D 25/00, B60J 1/00, B60J 1/14

(54) **VITRAGE LATERAL DE MOYEN DE TRANSPORT A SUBSTRAT ISSUE DE SECOURS RENFORCE**
SEITENFENSTER EINES TRANSPORTMITTELS MIT VERSTÄRKTEM NOTAUSGANGSSUBSTRAT
SIDE WINDOW OF A MEANS OF TRANSPORT HAVING A REINFORCED EMERGENCY EXIT SUBSTRATE

(30) Priorité: 25.03.2015 FR 1552506
(43) Date de publication de la demande: 31.01.2018
(73) Titulaire: SAINT-GOBAIN GLASS FRANCE, 92400 Courbevoie (FR)
(72) Inventeur: GASTAL, Guillaume, 68-200 Zary (PL)
(74) Mandataire: Saint-Gobain Recherche
(86) Numéro de dépôt international: PCT/FR2016/050658
(87) Numéro de publication internationale: WO 2016/151256

(56) Documents cités:
- EP-A1- 2 363 284
- EP-A1- 2 559 604
- EP-A2- 0 114 257
- EP-A2- 1 106 407
- EP-A2- 2 642 061
- DE-A1- 10 139 959
- DE-A1-102006 057 288
- DE-C1- 10 119 315
- DE-C1- 10 207 600
- FR-A1- 2 712 840

## Description

L'invention concerne la réalisation d'un vitrage latéral d'un moyen de transport, et en particulier un vitrage de train, ledit vitrage étant un vitrage multiple, fixe, éventuellement à fenêtre ouvrable.

Un tel vitrage comprend habituellement :
- un substrat extérieur ayant une face extérieure qui fait face à un espace extérieur, une face intermédiaire à l'opposé de la face extérieure, ainsi qu'un chant périphérique,
- un substrat intérieur ayant une face intérieure qui fait face à un espace intérieur, une face intermédiaire à l'opposé de la face intérieure, ainsi qu'un chant périphérique,
- et une structure de cadre de vitrage qui tient le substrat extérieur et le substrat intérieur ensemble de telle sorte que le vitrage sépare ledit espace extérieur dudit espace intérieur avec une cavité de vitrage située entre le substrat extérieur et le substrat intérieur.

Dans le cas où le vitrage est ouvrable, ledit substrat extérieur et ledit substrat intérieur comportent chacun, dans une partie supérieure, un trou débouchant sur chaque face du substrat et séparé du chant périphérique du substrat, les trous des substrats étant en vis-à-vis l'un de l'autre, afin de permettre de réaliser la fenêtre ouvrable et la structure de cadre de vitrage maintient en outre les deux substrats autour des trous.

Pour qu'un vitrage soit de sécurité, il comporte en outre un feuilletage comprenant d'une part au moins une feuille de verre principale et d'autre part une feuille de matière plastique principale, ladite feuille de matière plastique principale étant située en contact (sans espace) entre d'une part la face intermédiaire dudit substrat extérieur et d'autre part la feuille de verre principale.

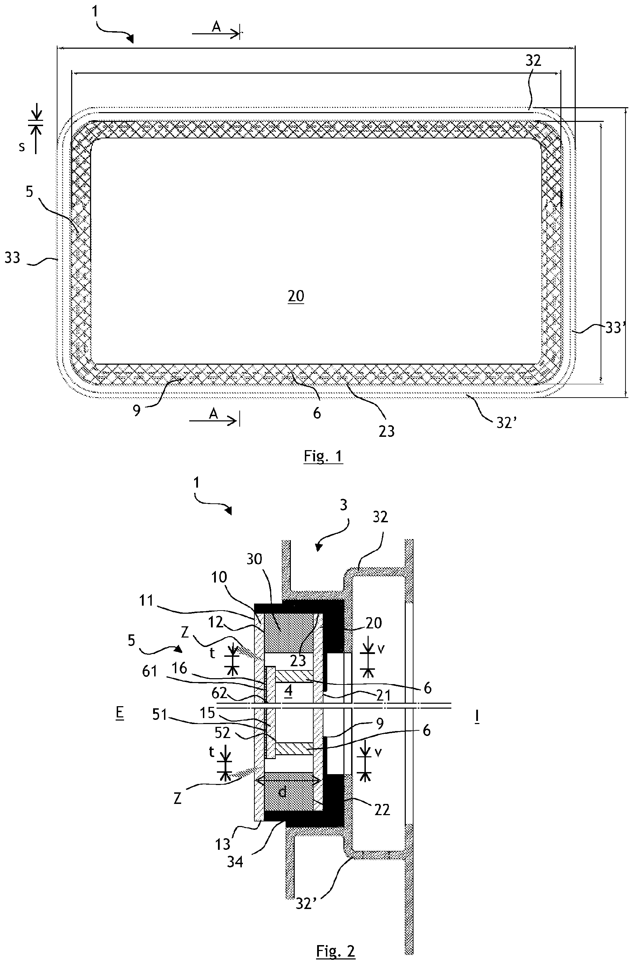

La demande de brevet français N° FR 2 712 840 expose la réalisation d'un double vitrage de sécurité dont le substrat extérieur est feuilleté. Les figures 1 et 2 de ce document montrent que la structure de cadre de vitrage qui tient le substrat extérieur et le substrat intérieur ensemble pour former la cavité de vitrage comporte d'une part un espaceur (référencé 8 et 18 sur ces figures) et d'autre part une matière adhésive (référencée 9 et 19 sur ces figures).

L'art antérieur connaît par ailleurs de la demande de brevet européen N° EP 2 363 284, et en particulier de la variante de la figure 2, une structure de vitrage latéral de moyen de transport, ce vitrage étant multiple, fixe, de sécurité et issue de secours, sans fenêtre ouvrable. Ce document expose une solution permettant de faciliter la rupture du vitrage, et ainsi de faciliter l'évacuation.

Dans ce document, il est proposé qu'un feuilletage de renfort d'un substrat du vitrage ne soit pas au contact d'une structure périphérique de cadre de vitrage en prévoyant que ce feuilletage soit en retrait de cette structure périphérique. Ce retrait est le même tout autour de la périphérie du substrat : la distance entre le chant du feuilletage et le chant du substrat qui le porte est la même tout le long de la périphérie.

L'art antérieur connaît en outre du modèle d'utilité chinois N° CN 202788522, un vitrage latéral de moyen de transport multiple, fixe, à fenêtre ouvrable.

Ce vitrage présente une esthétique satisfaisante grâce aux substrats munis chacun d'un trou rectangulaire pour permettre de réaliser la fenêtre ouvrable.

Ce vitrage présente une capacité d'isolation thermique satisfaisante grâce à présence de la cavité de vitrage entre les deux substrats.

Toutefois, ce vitrage ne constitue pas un vitrage dit « de sécurité » car les substrats en verre, même si un ou tous les deux a ou ont subi un traitement chimique ou thermique destiné à le ou les renforcer, ne permet pas de réaliser un vitrage de sécurité dans le sens où si un objet percute l'un des substrats et le brise, cela signifie que cet objet a très probablement suffisamment d'énergie pour pouvoir briser l'autre substrat et ainsi briser complètement le vitrage.

Seul un feuilletage, comprenant au moins une feuille de matière plastique puis une feuille de verre qui sont prévus dans cet ordre sur une surface d'un substrat, permet de réaliser un vitrage de sécurité. Un tel vitrage de sécurité est plus résistant aux chocs, tout en permettant au besoin une évacuation après rupture des substrats en verre et en découpant la feuille de matière plastique.

Un inconvénient majeur des vitrages multiples de moyens de transport de sécurité est que lorsque le substrat extérieur se brise lors d'un trajet sous l'impact d'un objet extérieur, alors il est nécessaire, pour la sécurité des passagers, de procéder à l'évacuation de tous les passages du compartiment dont le vitrage présente un substrat extérieur brisé.

Un but de l'invention est de permettre de réaliser un vitrage multiple, fixe, éventuellement à fenêtre ouvrable, qui présente une facilité de destruction dans une partie extérieure, tout en permettant de maintenir en position cette partie extérieure si elle est cassée involontairement (dans une situation autre que l'évacuation de secours).

L'invention repose ainsi sur le fait de prévoir un feuilletage de renfort dans la partie extérieure de vitrage (et dans la partie extérieure de vitrage située sous la fenêtre ouvrable s'il y en a une), et de prévoir en outre des moyens pour maintenir ce feuilletage attaché au vitrage si le substrat extérieur est cassé involontairement et plus précisément pour maintenir ce feuilletage attaché à une surface qui est située en vis-à-vis de la cavité de vitrage par rapport à ce feuilletage, et indépendamment de la structure de cadre de vitrage.

L'invention a pour objet, dans son acception la plus large, un vitrage latéral d'un moyen de transport, en particulier un vitrage de train, selon la revendication 1. Ce vitrage est un vitrage multiple, fixe, comprenant :
- un substrat extérieur ayant une face extérieure qui fait face à un espace extérieur, une face intermédiaire à l'opposé de la face extérieure, ainsi qu'un chant périphérique,
- un substrat intérieur ayant une face intérieure qui fait face à un espace intérieur, une face intermédiaire à l'opposé de la face intérieure, ainsi qu'un chant périphérique,
- une structure de cadre de vitrage qui est située en périphérie de la face intermédiaire dudit substrat extérieur et en périphérie de la face intermédiaire dudit substrat intérieur et qui tient le substrat extérieur et le substrat intérieur ensemble de telle sorte que le vitrage sépare ledit espace extérieur dudit espace intérieur avec une cavité de vitrage située entre le substrat extérieur et le substrat intérieur, ladite structure de cadre de vitrage comportant une entretoise périphérique qui est située tout autour de la périphérie des deux substrats,
- et un feuilletage comprenant d'une part au moins une feuille de verre principale et d'autre part une feuille de matière plastique principale, ladite feuille de matière plastique principale étant située en contact entre la face intermédiaire dudit substrat extérieur et la feuille de verre principale.

Le vitrage selon l'invention est remarquable en ce qu'il comporte en outre au moins un pont de liaison qui est séparé de ladite structure de cadre de vitrage et réalise une liaison entre un bord périphérique dudit feuilletage et une surface située en vis-à-vis, transversalement, de l'autre côté de ladite cavité de vitrage, ladite structure de cadre de vitrage étant plus centrifuge que ledit pont de liaison.

Ce pont de liaison attache mécaniquement ce bord périphérique dudit feuilletage et la surface située de l'autre côté de ladite cavité de vitrage, en vis-à-vis, transversalement. Un pont de liaison est différent d'une entretoise (ou « espaceur ») au sens habituel dans la technique considérée ici, car un pont de liaison de participe pas, mécaniquement, à l'existence et au maintien de la cavité de vitrage située entre le substrat extérieur et le substrat intérieur en usage normal du vitrage (lorsque le substrat extérieur est intègre) ; c'est la structure de cadre de vitrage qui crée et maintient cette cavité de vitrage, en comportant une entretoise.

En un sens, le pont de liaison participe à l'existence et au maintien d'une certaine cavité de vitrage située entre le substrat extérieur et le substrat intérieur lorsque le substrat extérieur est cassé et retenu par le feuilletage et le pont de liaison, mais ce n'est pas une cavité de vitrage usuelle : il s'agit seulement de permettre de conserver une certaine intégrité au vitrage afin de permettre au moyen de transport de continuer son trajet jusqu'au garage adéquat et permettre ainsi d'éviter l'immobilisation du moyen de transport jusqu'au remplacement du vitrage.

Ce pont de liaison est ainsi situé entre d'une part un bord périphérique de la face intermédiaire du substrat intérieur et d'autre part un bord périphérique de la face intermédiaire centrale de la feuille de verre principale (celle qui est orientée vers la cavité de vitrage) et/ou un bord périphérique de la face intermédiaire centrale de la feuille de matière plastique principale (celle qui est orientée vers la cavité de vitrage). Ce pont de liaison réalise ainsi une liaison mécanique entre un bord périphérique de la face qui est située d'une part de la cavité de vitrage et un bord périphérique de celle(s) qui est (sont) située(s) d'autre part de la cavité de vitrage ; ce pont de liaison adhère aux deux surfaces situées en vis-à-vis, transversalement, de chaque côté de ladite cavité de vitrage.

De préférence, ledit feuilletage n'est pas au contact direct de la structure de cadre de vitrage ou n'est pas lié directement mécaniquement et/ou chimiquement à la structure de cadre de vitrage, c'est-à-dire que ladite feuille de verre principale et ladite feuille de matière plastique principale ne sont pas au contact direct de ladite structure de cadre de vitrage ou ne sont pas liées directement mécaniquement et/ou chimiquement à la structure de cadre de vitrage alors que le substrat intérieur et le substrat extérieur sont tous les deux au contact direct de ladite structure de cadre de vitrage et sont liées (attachés) tous les deux directement mécaniquement et/ou chimiquement à la structure de cadre de vitrage.

Ladite feuille de verre principale et ladite feuille de matière plastique principale sont ainsi, de préférence, disposées en retrait d'au moins 2 mm, et de préférence entre 2 et 5 mm, par rapport à ladite structure de cadre de vitrage. Ce retrait est de préférence constant tout autour du feuilletage principal. Une valeur de retrait comprise dans cette plage de 2 à 5 mm permet que le feuilletage renforce au maximum le substrat qui le porte, tout en étant suffisante pour permettre de préserver l'intégrité de la structure de vitrage et permet en outre que ce retrait soit peu visible de l'intérieur en conservant un clair de vitre à travers le feuilletage qui soit le plus grand possible.

Ainsi, lorsque le vitrage est orienté verticalement, le feuilletage comprenant la feuille de verre principale et la feuille de matière plastique principale est disposé contre la surface du substrat extérieur qui est orientée vers la cavité de vitrage ; ce feuilletage s'arrête en haut, sur les côtés et en bas à une distance du chant périphérique du substrat qui le porte, afin que lorsque ce substrat porteur est brisé, involontairement, dans la zone où il n'est pas feuilleté, le pont de liaison retient le substrat porteur du feuilletage et le feuilletage.

Pour le cas où le substrat porteur est intact, il reste possible de séparer le substrat porteur du feuilletage et le feuilletage du reste du vitrage afin de permettre une évacuation de secours, en brisant ou en découpant au préalable le pont de liaison.

De préférence, chaque substrat est en verre qui a subi un traitement chimique ou thermique destiné à le renforcer.

Il est possible de réaliser le pont de liaison continu ou discontinu selon sa périphérie.

Lorsque le pont de liaison est continu sur sa longueur périphérique, il est alors séparé de ladite structure de cadre de vitrage sur toute sa longueur périphérique, afin de conférer une retenue efficace du feuilletage (et du substrat extérieur).

Lorsque le pont de liaison est discontinu sur sa longueur périphérique, il est présent, séparé de ladite structure de cadre de vitrage, sur une longueur périphérique comprise entre 20 % et 95 %, voire entre 30 et 50%, de la longueur périphérique dudit feuilletage (c'est-à-dire la longueur du chant de la feuille de verre principale du feuilletage). Il est ainsi possible de diminuer le poids du vitrage.

Il est possible par exemple de prévoir que le vitrage comporte quatre ponts de liaison, un le long de chaque bord (haut, bas, droit, gauche) du feuilletage et sur une longueur, par exemple pour chacun des bords, comprise entre un tiers et la moitié de la longueur du bord du feuilletage (c'est-à-dire la longueur du chant du bord de la feuille de verre principale du feuilletage).

De préférence, ledit pont de liaison est situé à une distance au plus court comprise entre 2,0 et 30,0 mm, et de préférence à une distance au plus court comprise entre 5,0 et 20,0 mm, de ladite structure de cadre de vitrage. Il est ainsi possible de ménager une zone de rupture périphérique du substrat extérieur qui soit suffisamment grande, sans trop diminuer le clair de vue. Cette distance est de préférence constante tout le long de la périphérie de la structure de cadre de vitrage (que le pont de liaison soit continu ou discontinu).

Le pont de liaison peut comprendre un cordon de colle notamment à base de polyuréthane ou de silicone ou de MS polymère (c'est-à-dire de polyéther modifié silane) ou de polysulfide, afin que la liaison chimique de part et d'autre de la cavité de vitrage soit forte.

Le pont de liaison peut comprendre un profilé métallique qui est collé latéralement de chaque côté de la cavité de vitrage, avec un tel cordon de colle ou être en partie ou complètement intégré dans un tel cordon de colle.

Le pont de liaison pourrait comprendre un câble, et notamment un câble métallique, qui est collé latéralement de chaque côté de la cavité de vitrage.

De préférence, ledit pont de liaison est situé, vu de l'intérieur et/ou vu de l'extérieur, derrière une bande de masquage, afin qu'il ne soit pas présumé, à la vue de ce pont de liaison, que le vitrage ne serait pas une issue de secours.

Il est préférable que chaque substrat soit en verre qui a subi un traitement chimique ou thermique destiné à le renforcer.

Dans un premier mode de réalisation, le vitrage est un vitrage simple.

Dans un second mode de réalisation, le vitrage est ouvrable. Dans ce second mode, ledit substrat extérieur et ledit substrat intérieur comportent chacun, dans une partie supérieure, un trou débouchant sur chaque face du substrat et séparé du chant périphérique du substrat, les trous des substrats étant en vis-à-vis l'un de l'autre, afin de permettre de réaliser une fenêtre ouvrable, la structure de cadre de vitrage maintenant en outre les deux substrats autour des trous et, dans une partie du vitrage située sous ladite fenêtre, ledit feuilletage n'est pas au contact de ladite structure de cadre de vitrage. Ainsi, lorsque le vitrage est orienté verticalement, le feuilletage comprenant la feuille de verre principale et la feuille de matière plastique principale est, de préférence, disposé en-dessous de la fenêtre ouvrable ; ce feuilletage s'arrête alors en haut à une distance, en-dessous d'un bord périphérique inférieur du trou du substrat qui permet de réaliser la fenêtre et sur les côtés et en bas à une distance du chant périphérique du substrat qui le porte, afin que lorsque ce feuilletage est brisé pour permettre une évacuation de secours, sa destruction n'ait pas d'influence sur l'intégrité du vitrage tout autour et tout particulièrement n'ait pas d'influence au-dessus, sur l'intégrité de la fenêtre.

Puisque ce feuilletage principal est situé sous la fenêtre ouvrable, il ne s'étend pas sur les côtés gauche et droit de la fenêtre ouvrable, ni au-dessus de la fenêtre ouvrable (lorsque le vitrage est considéré vertical).

Le feuilletage principal s'arrête dans sa partie supérieure en dessous d'une ligne horizontale qui serait réalisée par le bord inférieur du trou du substrat porteur du feuilletage principal, cette ligne étant fictivement prolongée sur le substrat porteur du feuilletage principal, à gauche et à droite du trou.

Dans ce second mode de réalisation, ladite structure de cadre de vitrage comporte, de préférence, une traverse horizontale située sous ladite fenêtre, ladite traverse n'étant pas en contact avec deux montants latéraux de la structure de cadre de vitrage.

Ladite cavité de vitrage est, de préférence, située tout autour de ladite fenêtre (cette cavité de vitrage est d'un seul tenant), afin de ne pas gêner la fonction « issue de secours ».

Le vitrage selon l'invention ne comporte, de préférence, aucun élément saillant vers l'extérieur, au-delà de la face extérieure du substrat extérieur, afin de diminuer les frottements dans l'air pour le moyen de transport.

Chaque feuille de matière plastique utilisée pour le vitrage selon l'invention présente une capacité à renforcer la résistance mécanique en faisant adhérer la feuille de verre disposée dessus au substrat ou à l'élément verrier disposé dessous ; dans ce vitrage, au moins une de ces feuilles de matière plastique, voire toutes ces feuilles de matière plastique, peut ou peuvent présenter en outre une capacité d'isolation phonique.

Avantageusement, la présente invention permet ainsi de réaliser un vitrage multiple fixe de moyen de transport qui présente des caractéristiques d'isolation thermique élevées, des caractéristiques de tenue mécanique élevées, tout en pouvant servir d'issue de secours, avec la certitude que même si cette issue de secours est cassée accidentellement du côté du feuilletage, elle reste présente dans le vitrage.

Ainsi, grâce à la présence du (ou des) pont(s) qui retienne(nt) le feuilletage - et donc le substrat extérieur - au substrat intérieur, ou à un élément qui lui est directement attaché, le vitrage conserve une certaine intégrité lorsque le substrat extérieur est brisé : le moyen de transport peut continuer à rouler et notamment subir les pressions/dépressions usuelles lors de son fonctionnement normal, en particulier lorsqu'il croise un autre moyen de transport ou lorsqu'il entre, est et sort d'un tunnel. Même si le vitrage doit être changé suite à la rupture du substrat extérieur, cela peut attendre la fin du parcours du moyen de transport avec ses passagers et jusqu'à sa destination finale. Il n'est plus nécessaire de procéder à l'évacuation immédiate des passagers du compartiment dont un vitrage présente un substrat extérieur brisé.

La présente invention permet en particulier, lorsque le vitrage comporte une fenêtre ouvrable, que l'espace du vitrage qui est situé sous la fenêtre ouvrable puisse être utilisé comme issue de secours en préservant l'intégrité du reste du vitrage, c'est-à-dire en permettant à la structure de fenêtre de rester en place afin de ne pas gêner l'évacuation, en dessous, par l'issue de secours ainsi créée.

Avantageusement, la présente invention permet ainsi de réaliser un vitrage multiple fixe, éventuellement à fenêtre ouvrable, qui présente une vue extérieure lisse, sans élément mécanique plus à l'extérieur que la face extérieure du substrat extérieur.

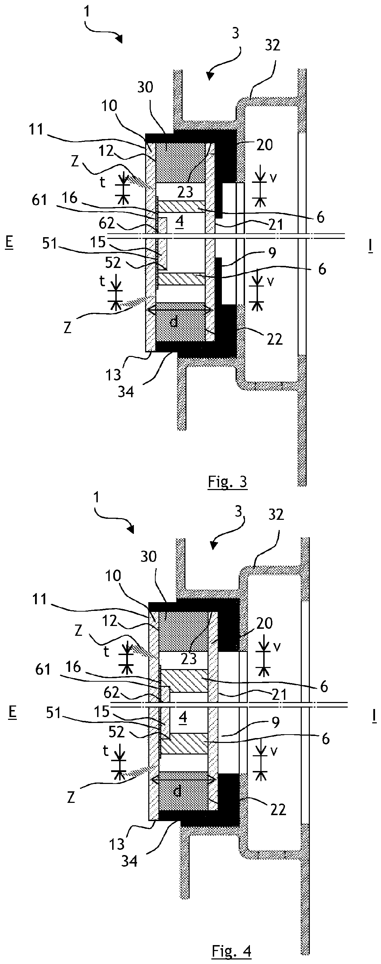

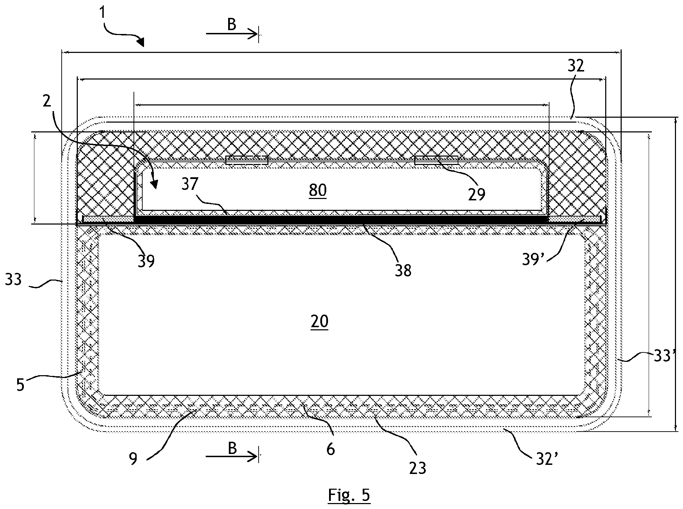

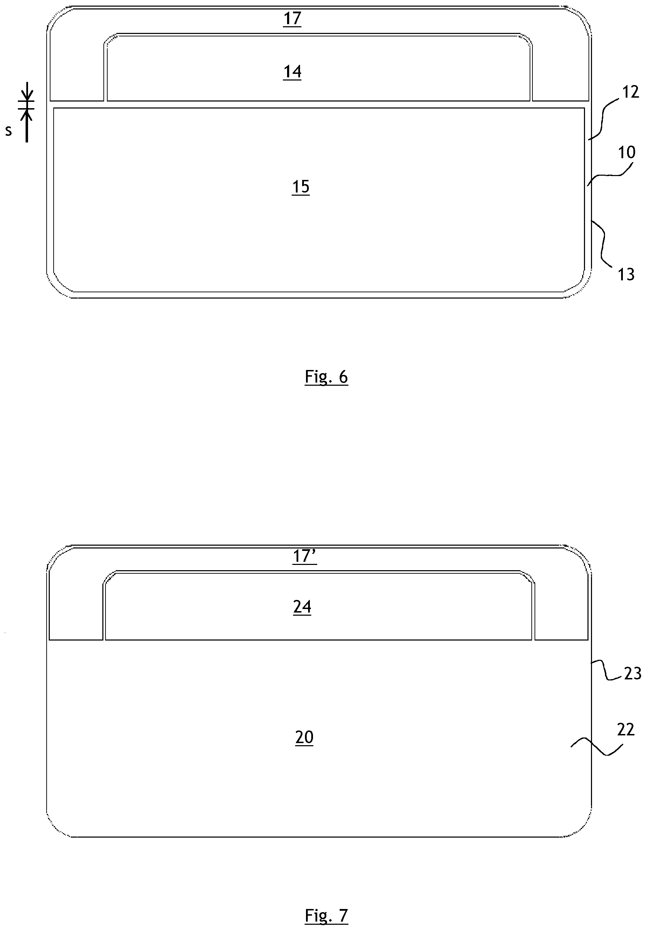

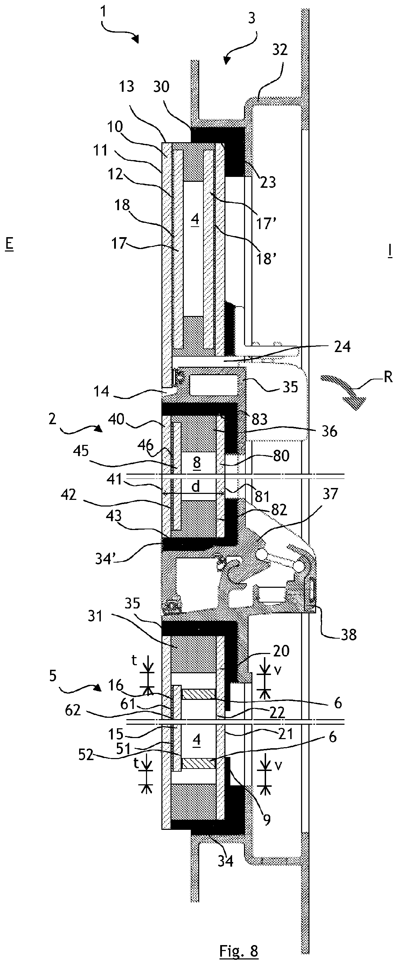

Les détails et caractéristiques avantageuses de l'invention ressortent des exemples non limitatifs suivant, illustrés à l'aide des figures ci-jointes illustrant :
- en figure 1, une premier mode de réalisation d'un vitrage selon l'invention, sans fenêtre ouvrable, vu de l'espace intérieur ;
- en figure 2, le vitrage de la figure 1 vu en coupe selon AA de cette figure, selon une première variante ;
- en figure 3, le vitrage de la figure 1 vu en coupe selon AA de cette figure, selon une seconde variante ;
- en figure 4, le vitrage de la figure 1 vu en coupe selon AA de cette figure, selon une troisième variante ;
- en figure 5, un second mode de réalisation d'un vitrage selon l'invention, avec fenêtre ouvrable, vu de l'espace intérieur ;
- en figure 6, le substrat extérieur du vitrage de la figure 5 vu de la cavité de vitrage et vers l'extérieur ;
- en figure 7, le substrat intérieur du vitrage de la figure 5 vu de la cavité de vitrage et vers l'intérieur ; et
- en figure 8, le vitrage de la figure 5 vu en coupe selon BB de cette figure.

Dans les figures 1 à 8 les proportions entre les dimensions des différents éléments sont respectées afin de faciliter leur lecture ; les mêmes références désignent les mêmes éléments dans toutes les figures.

Les figures 1 et 5 illustrent un vitrage 1 latéral d'un moyen de transport, selon l'invention, tel qu'il peut être vu par un passager situé à l'intérieur de ce moyen de transport.

Il s'agit en particulier d'un vitrage latéral de train et la figure 1 illustre ainsi ce qu'un passager du train voit en regardant sur un côté gauche ou droit par rapport à une direction générale d'avancé du train.

Ce vitrage réalise ainsi une séparation verticale entre un espace intérieure I qui est à l'intérieur du train et un espace extérieur E qui est à l'extérieur du train.

Ce vitrage 1 est fixe. Dans le premier mode de réalisation, celui de la figure 1, le vitrage 1 est d'un seul tenant, sans fenêtre ouvrable à l'intérieur alors que dans le second mode de réalisation, celui de la figure 5, le vitrage 1 comporte une fenêtre 2 ouvrable.

Ce vitrage 1 comprend :
- un substrat extérieur 10 qui comporte deux faces principales : une face extérieure 11 qui fait face à l'espace extérieur E et une face intermédiaire 12 qui est à l'opposé de la face extérieure ; ce substrat comporte par ailleurs un chant périphérique 13,
- un substrat intérieur 20 qui comporte deux faces principales : une face intérieure 21 qui fait face à l'espace intérieur I et une face intermédiaire 22 qui est à l'opposé de la face intérieure ; ce substrat comporte par ailleurs un chant périphérique 23,
- et une structure de cadre de vitrage 3 qui maintient fixement ensemble le substrat extérieur 10 et le substrat intérieur 20 ; toutefois, un espace fermé est situé entre les deux substrats : il s'agit d'une cavité de vitrage 4.

Le substrat extérieur 10 et le substrat intérieur 20 sont chacun d'un seul tenant.

Dans le second mode de réalisation seulement, qui sera décrit plus en détail plus loin, le substrat extérieur 10 et le substrat intérieur 20 comportent chacun, dans une partie supérieure (par rapport à la verticale), un trou 14, 24, chaque trou débouchant sur chaque face de chaque substrat et est séparé du chant périphérique du substrat, les trous des substrats étant en vis-à-vis l'un de l'autre, afin de permettre de réaliser une fenêtre 2 ouvrable, c'est-à-dire afin de permettre de réaliser le pourtour fixe de la fenêtre ouvrable. La structure de cadre de vitrage 3 maintient en outre les deux substrats autour des trous 14, 24.

La structure de cadre de vitrage 3 permet ainsi de maintenir les deux substrats 10, 20 à distance l'un de l'autre, y compris autour de la fenêtre ouvrable, avec une distance constante entre les deux substrats 10, 20.

Le vitrage 1 est un vitrage multiple dans le sens où il comporte plusieurs substrats 10, 20 ainsi que la cavité de vitrage 4 qui est située entre les deux substrats, cette cavité étant remplie d'air ou de gaz, de préférence neutre comme l'argon ; cette cavité participe à l'isolation thermique conférée par le vitrage 1.

Ce vitrage 1 est un vitrage fixe dans le sens où la structure de cadre de vitrage 3 est destinée à être fixée à la structure du moyen de transport (ici le train), sans possibilité de bouger par rapport à cette structure.

Comme visible plus particulièrement sur la figure 2, la structure de cadre de vitrage 3 comporte une entretoise périphérique 30 (ou « espaceur ») qui est située tout autour de la périphérie des deux substrats 10, 20, c'est-à-dire qu'elle suit le chant périphérique 13, 23 de ces deux substrats, en réalisant une continuité entre ces deux chants et en s'étendant vers le centre du vitrage.

Cette entretoise est de préférence d'un seul tenant.

Cette entretoise est ici positionnée contre les faces intermédiaires 12, 22 des substrats, en pourtour de ces faces intermédiaires 12, 22, sans être en contact avec les chants périphériques 13, 23 des substrats. Elle est collée latéralement aux faces intermédiaires 12, 22 des substrats.

L'entretoise peut être par exemple en matière plastique et/ou en métal et/ou en alliage métallique ; elle permet de maintenir les deux substrats 10, 20 à une distance constante l'un de l'autre et de créer la cavité de vitrage 4.

L'entretoise peut comporter un profilé métallique, comme par exemple un profilé en aluminium, et un cordon de colle double, pour coller ce profilé aux pourtours des faces intermédiaires 12, 22 ; il peut comporter en outre un mastic de scellement et/ou un joint de parclose qui maintient le vitrage en le pressant contre une butée de la baie.

Au regard de la hauteur de l'entretoise (lorsqu'observée verticalement), le feuilletage particulier se traduit par le fait que la feuille de verre principale 15 et la feuille de matière plastique principale 16 sont disposés en retrait t d'au moins 2 mm, et de préférence d'au moins 5 mm, par rapport à ladite structure de cadre de vitrage 3, c'est-à-dire par rapport à l'entretoise périphérique 30 en haut de ce feuilletage, sur les côtés latéraux et en bas de ce feuilletage.

La structure de cadre de vitrage 3 comporte par ailleurs des montants horizontaux haut 32 et bas 32', ainsi que des montants latéraux gauche 33 et droit 33' (vu de l'intérieur, comme en figure 1). Ces montants sont de préférence en métal ou en alliage métallique.

La structure de cadre de vitrage 3 comporte en outre un cordon de colle périphérique 34 qui permet de coller les chants périphériques 13, 23 des substrats et l'entretoise périphérique 30 avec les montants 32, 32', 33, 33'. Ce cordon de colle peut être par exemple à base de polyuréthane ou silicone ou MS polymère ou polysulfide.

Les montants 32, 32', 33 et 33' sont facultatifs car il est possible que le vitrage soit collé dans la baie sans utiliser de montants ou en utilisant seulement des montants latéraux ou des montants horizontaux.

Il a été vérifié qu'une tenue mécanique adéquate est obtenue sur la base de l'exemple des figures 1 à 4, lorsque :
- les deux substrats 10, 20 sont chacun en verre qui a subi un traitement destiné à le renforcer, tel qu'un traitement thermique et en particulier un traitement thermique de trempe et sont chacune d'une épaisseur de 3 à 8 mm, par exemple 4 mm,
- la feuille verre principale 15 est en verre qui n'a subi aucun traitement destiné à le renforcer et est d'une épaisseur de 2 mm,
- la feuille de matière plastique principale 16 est en PVB et est d'une épaisseur de 0,76 mm.

Eventuellement, la feuille verre principale 15 peut être en verre qui a subi un traitement destiné à le renforcer, tel qu'un traitement thermique et en particulier un traitement thermique de trempe.

Il a été vérifié qu'une isolation thermique adéquate est obtenue sur la base de l'exemple des figures 1 à 4, lorsque ladite cavité de vitrage 4 est d'un seul tenant, qu'elle est remplie d'argon et présente d'une part une épaisseur uniforme. La distance entre la face extérieure 11 et la face intérieure 21 est ainsi constante et est ici de 25,76 mm.

Dans le premier mode de réalisation de l'invention, la face intermédiaire 12 du substrat extérieur 10, qui fait face à la cavité de vitrage 4, comporte un feuilletage 5 comprenant :
- d'une part une feuille de verre principale 15
- et d'autre part une feuille de matière plastique principale 16,
- avec cette feuille de matière plastique principale 16 qui est située entre la face intermédiaire 12 et la feuille de verre principale 15,
- cette feuille de matière plastique principale 16 qui est en contact à la fois avec la face intermédiaire 12 et avec la feuille de verre principale 15,
- sans que la feuille de verre principale 15 et sans que la feuille de matière plastique principale 16 soient au contact de ladite structure de cadre de vitrage 3.

Le feuilletage comprend ainsi :
- la feuille de verre principale 15 qui comporte deux faces principales : une face principale extérieure 51 qui est orientée vers le substrat extérieur 10 et une face intermédiaire centrale 52 qui est à l'opposé, orientée vers la cavité de vitrage 4 ; cette feuille de verre principale 15 comporte par ailleurs un chant périphérique, et
- la feuille de matière plastique principale 16 qui comporte deux faces principales : une principale extérieure 61 qui est orientée vers le substrat extérieur 10 et une face intermédiaire centrale 62 qui est à l'opposé, orientée vers la cavité de vitrage 4 ; cette feuille de matière plastique principale 16 comporte par ailleurs un chant périphérique.

Ainsi, le vitrage 1 comporte au moins un substrat extérieur qui est feuilleté, mais ce feuilletage est particulier car la feuille de matière plastique puis la feuille de verre qui sont ajoutées dans cet ordre sur la face intermédiaire du substrat présentent une périphérie resserrée par rapport à la périphérie du substrat afin de ne pas être en contact, ni l'une, ni l'autre, avec la structure de cadre de vitrage 3. Les chants des feuilles constituant le feuilletage ne sont donc pas en contact avec la structure de cadre de vitrage 3.

Cette caractéristique se voit plus particulièrement en figure 1 où il est illustré que le feuilletage 5 réalisé par la feuille de verre principale 15 qui est collée à la surface intermédiaire 12 par la feuille de matière plastique principale 16 s'arrête en haut, en bas, à gauche et à droite à une distance s du chant périphérique 13 ; cette distance s est d'au moins 5 mm, et de préférence d'au moins 7 mm ; elle peut être par exemple de 6 mm, ou de 8 mm.

Cette caractéristique est importante pour conférer au vitrage sa qualité de vitrage de sécurité et d'évacuation : lorsque le vitrage 1 doit être cassé pour permettre l'évacuation, le substrat intérieur 20 est d'abord cassé, par exemple avec un marteau ; ensuite, des chocs répétés contre la feuille de verre principale 15 vont casser cette feuille puis casser le substrat extérieur 10 à l'endroit où le feuilletage 5 (feuille de verre principale 15 + feuille de matière plastique principale 16) est absent, c'est-à-dire à l'endroit marqué par les zones de rupture Z, qui sont situées tout autour du feuilletage, sur la distance s.

Si la feuille de matière plastique et la feuille de verre qui sont ajoutées sur la face intermédiaire du substrat extérieur allaient jusqu'au chant périphérique 13 du substrat, alors ces feuilles seraient en contact avec la structure de cadre de vitrage 3 et l'effort requis pour casser le vitrage en cas d'urgence serait trop grand pour permettre l'évacuation dans les conditions requises.

Toutefois, il se peut que le substrat extérieur 10 se casse, et en particulier se casse dans une zone de rupture Z où il n'y a pas de feuilletage, sous l'effet d'un choc venant de l'extérieur, comme par exemple un caillou provenant du ballast et projeté par le souffle d'un autre train.

Ainsi, pour sécuriser le vitrage et empêcher le substrat extérieur 10 (et le feuilletage 5) de tomber, au moins un pont de liaison 6 est prévu.

Ce pont de liaison 6 peut être situé :
- entre la face intermédiaire 22 du substrat intérieur 20 et la face intermédiaire centrale 52 de la feuille de verre principale 15, comme illustré en figure 2, ou
- entre la face intermédiaire 22 du substrat intérieur 20 et la face intermédiaire centrale 62 de la feuille de matière plastique principale 16, comme illustré en figure 3, ou
- entre d'une part la face intermédiaire 22 du substrat intérieur 20 et d'autre part à la fois à la face intermédiaire centrale 52 de la feuille de verre principale 15 et à la face intermédiaire centrale 62 de la feuille de de matière plastique principale 16, comme illustré en figure 4.

Lorsque le vitrage 1 est considéré de face, comme en figure 1, il est possible de considérer que le vitrage présente un centre qui est dans le plan de la feuille. En suivant cette considération, la structure de cadre de vitrage 3 est plus centrifuge que le pont de liaison 6.

Sur cette figure, le pont de liaison 6 est continu et il est séparé de la structure de cadre de vitrage 3 sur toute sa longueur ; il est séparé par une cavité de vitrage secondaire, similaire à la cavité de vitrage 4 principale. Le long de sa périphérie, le pont de liaison n'est pas en contact direct avec la structure de cadre de vitrage et ainsi n'est pas en contact direct avec l'entretoise périphérique 30.

Il est possible de réaliser le pont de liaison 6 discontinu ; il peut alors être présent sur une longueur comprise entre 20 % et 95 % de la périphérie dudit feuilletage 5. Toutefois dans ce cas, le pont de liaison 6 est aussi séparé de la structure de cadre de vitrage 3.

Il n'est pas nécessaire de prévoir un grand volume entre le pont de liaison 6 et la structure de cadre de vitrage 3 ; il suffit de prévoir qu'ils ne sont pas liés l'un à l'autre, ni mécaniquement, ni chimiquement (par exemple par de la colle), afin que le substrat extérieur 10 puisse être séparé facilement du reste du vitrage afin de faire office de voie de secours.

Le pont de liaison 6 est situé à une distance v au plus court comprise entre 2,0 et 30,0 mm, et de préférence à une distance v au plus court comprise entre 5,0 et 20,0 mm, de ladite structure de cadre de vitrage 3.

Une valeur v de 5,0 mm constante tout autour du pont de liaison donne de bons résultats : la zone Z est suffisamment grande pour que le substrat 10 puisse se séparer relativement facilement du reste du vitrage, sans trop diminuer le clair de vue au travers du vitrage.

Le pont de liaison 6 est ici un cordon de colle à base de polyuréthane ; ce pourrait être aussi un cordon de colle à base de silicone ou de MS polymère ou de polysulfide. Le pont de liaison 6 peut ainsi être dans le même matériau que le cordon de colle périphérique 34.

La figure 1 montre par ailleurs une bande de masquage 9, périphérique, située sur la face intérieure 21 du substrat intérieur. Cette couche de masquage cache la périphérie de cette face intérieure 21 et cache le ou les ponts de liaison 6.

Le pont de liaison 6 est ainsi situé, vu de l'intérieur I derrière la bande de masquage 9 afin de ne pas être visible pour les utilisateurs du moyen de transport.

Un test a été réalisé avec un vitrage du type de celui illustré en figure 2, de dimensions identiques à un vitrage commercial, avec un pont de liaison 6 périphérique continu. Le substrat extérieur 10 a été cassé, puis le vitrage a été soumis à un programme de sollicitations comprenant 200 cycles de pression-dépression à plus ou moins 7 kPa. Il a été constaté que le substrat extérieur 10 cassé était toujours en place dans le vitrage à l'issue du test, car bien retenu par le pont de liaison 6.

Dans le second mode de réalisation, illustré en figures 5 à 8, la fenêtre 2, et elle seule, est mobile par rapport à la structure de cadre de vitrage 3. La fenêtre 2 est une fenêtre interne au vitrage 1 ; elle est ouvrable dans le sens où elle peut être ouverte et refermée par rapport à la structure de cadre de vitrage 3, qui est fixe. Bien sûr, des moyens sont prévus pour guider ces mouvements d'ouverture et de fermeture, ainsi que pour les limiter. Pour des raisons de sécurité, la fenêtre 2 est ouvrable vers l'espace intérieur et non vers l'espace extérieur.

Dans ce second mode de réalisation, la face intermédiaire 12 du substrat extérieur 10, celle qui fait face à la cavité de vitrage 4, comporte dans une partie du vitrage qui est située sous ladite fenêtre :
- d'une part une feuille de verre principale 15
- et d'autre part une feuille de matière plastique principale 16,
- avec cette feuille de matière plastique principale 16 qui est située entre la face intermédiaire 12 et la feuille de verre principale 15,
- cette feuille de matière plastique principale 16 qui est en contact à la fois avec la face intermédiaire 12 et avec la feuille de verre principale 15,
- sans que la feuille de verre principale 15 et la feuille de matière plastique principale 16 soient au contact de ladite structure de cadre de vitrage 3.

Ainsi, dans la seconde variante, le vitrage 1 comporte au moins un de ses substrats qui est feuilleté, en l'occurrence le substrat extérieur 10, mais ce feuilletage est particulier car la feuille de matière plastique puis la feuille de verre qui sont ajoutées dans cet ordre sur la face intermédiaire du substrat extérieur présentent une périphérie resserrée par rapport à la périphérie du substrat extérieur sous la fenêtre 2 afin de ne pas être en contact, ni l'une, ni l'autre, avec la structure de cadre de vitrage 3.

Cette caractéristique se voit plus particulièrement en figure 6 où il est illustré que le feuilletage réalisé par la feuille de verre principale 15 qui est collée à la surface intermédiaire 12 par la matière plastique principale 16 s'arrête en haut à une distance s du bord inférieur du trou 14 et s'arrête aussi à une distance, qui est de préférence la même, du chant périphérique 13 ; cette distance s est d'au moins 5 mm, et de préférence d'au moins 7 mm ; elle peut être par exemple de 6 mm, ou de 8 mm.

Cette caractéristique est importante pour conférer au vitrage sa qualité de vitrage de sécurité tout en permettant de préserver la structure de la fenêtre ouvrable ; si la feuille de matière plastique et la feuille de verre qui sont ajoutées sur la face intermédiaire du substrat allaient jusqu'au chant périphérique 13 du substrat et jusqu'au bord inférieur du trou 14 ou sur les côtés de la fenêtre ouvrable, alors ces feuilles seraient en contact avec la structure de cadre de vitrage 3 et l'effort requis pour casser le vitrage sous la fenêtre en cas d'urgence risquerait d'endommager la structure de cadre de fenêtre.

Or, si cette structure est endommagée, elle risque de gêner l'évacuation ; c'est un but poursuivi d'éviter cela.

Dans l'exemple de réalisation de la seconde variante qui est détaillé ici, seule la face intermédiaire 12 du substrat extérieur 10 comporte dans une partie du vitrage qui est située sous ladite fenêtre, la feuille de matière plastique principale 16, puis sur cette feuille de matière plastique principale la feuille verre principale 15 (c'est-à-dire un feuilletage et plus précisément le feuilletage principal), mais il pourrait être envisagé que la face intermédiaire 22 du substrat intérieur 20 comporte aussi un feuilletage dans une partie du vitrage qui est située sous ladite fenêtre.

Comme visible plus particulièrement sur la figure 8, la structure de cadre de vitrage 3 comporte deux entretoises :
- une entretoise périphérique 30 (ou « espaceur ») qui est située tout autour de la périphérie des deux substrats 10, 20, c'est-à-dire qu'elle suit le chant périphérique 13, 23 de ces deux substrats et
- une entretoise interne 31 (ou « espaceur ») qui est située tout autour de la périphérie des deux trous 14, 24.

Chacune de ces deux entretoises est de préférence d'un seul tenant. Elles ne sont pas en contact l'une avec l'autre.

Chacune de ces deux entretoises est ici positionnée contre les faces intermédiaires 12, 22 des substrats, sans être en contact avec les chants périphériques 13, 23 des substrats. Elles sont collées latéralement aux faces intermédiaires 12, 22 des substrats.

Les entretoises peuvent être par exemple en matière plastique et/ou en métal et/ou en alliage métallique ; elles permettent de maintenir les deux substrats 10, 20 à une distance constante l'un de l'autre et de créer la cavité de vitrage 4.

Au regard de la hauteur des entretoises (lorsqu'observées verticalement), la distance s évoquée ci-dessus se traduit par le fait que la feuille de verre principale 15 et la feuille de matière plastique principale 16 sont disposés en retrait t d'au moins 2 mm, et de préférence d'au moins 5 mm, par rapport à ladite structure de cadre de vitrage 3, c'est-à-dire par rapport à l'entretoise interne 31 en haut de ce feuilletage et par rapport à l'entretoise périphérique 30 sur les côtés latéraux et en bas de ce feuilletage.

La structure de cadre de vitrage 3 comporte par ailleurs des montants horizontaux haut 32 et bas 32', ainsi que des montants latéraux gauche 33 et droit 33' (vu de l'intérieur, comme en figure 5). Ces montants sont de préférence en métal ou en alliage métallique.

Cette figure 5 montre par ailleurs une bande de masquage 9, périphérique, située sur la face intérieure 21 du substrat intérieur. Cette couche de masquage cache la périphérie de cette face intérieure 21, ainsi que la périphérie de la fenêtre 2 ouvrable ; Cette couche de masquage cache le ou les ponts de liaison 6 et cache aussi tout ce qui est, en direction de l'extérieur, derrière la périphérie de la face intérieure 21 et la périphérie de la fenêtre 2 ouvrable.

La structure de cadre de vitrage 3 comporte en outre un cordon de colle périphérique 34 qui permet de coller les chants périphériques 13, 23 des substrats et l'entretoise périphérique 30 avec les montants 32, 32', 33, 33'. Ce cordon de colle peut être par exemple à base de polyuréthane ou de silicone ou de MS polymère ou de polysulfide.

Les montants 32 ; 32', 33 et 33' sont facultatifs car il est possible que le vitrage soit collé dans la baie sans utiliser de montants ou en utilisant seulement des montants latéraux ou des montants horizontaux.

Comme visible en figures 6 et 8, la face intermédiaire 12 du substrat extérieur comporte dans une partie du vitrage située au-dessus de ladite fenêtre 2 (et plus précisément sur cette figure au-dessus du trou 14 qui accueille la fenêtre 2), d'une part une feuille de verre secondaire 17 et d'autre part une feuille de matière plastique secondaire 18 qui est interposée, en contact, entre la face intermédiaire 12 et la feuille de verre secondaire 17.

La feuille de matière plastique secondaire 18 et la feuille de verre secondaire 17 sont aussi situées de chaque côté latéral de ladite fenêtre (et plus précisément sur cette figure de chaque côté latéral du trou 14 qui accueille la fenêtre 2).

Ainsi, le feuilletage par la feuille de matière plastique secondaire 18 et la feuille de verre secondaire 17 encadre le trou 14 au-dessus et sur ses côtés gauche et droit, en ayant une forme de U inversé ; ce feuilletage ne s'étend pas en dessous du trou 14 car c'est un autre feuilletage qui est présent en dessous de ce trou : le feuilletage avec la feuille de matière plastique principale 16 et la feuille verre principale 15.

Pour une bonne tenue mécanique du feuilletage au-dessus de la fenêtre et sur ces côtés, la feuille de verre secondaire 17 et la feuille de matière plastique secondaire 18 sont, de préférence, au contact de ladite structure de cadre de vitrage 3 et plus particulièrement ici, à proximité du chant périphérique 13 au contact de l'entretoise périphérique 30 et à proximité du trou 14 au contact de l'entretoise interne 31.

La feuille de verre secondaire 17 présente de préférence la même épaisseur que la feuille verre principale 15 et la feuille de matière plastique secondaire 18 présente de préférence la même épaisseur que la feuille de matière plastique principale 16 ; toutefois, ces feuilles de verre et ses feuilles de matière plastique ne se chevauchent pas.

Comme visible en figures 7 et 8, la face intermédiaire 22 du substrat intérieur comporte dans une partie du vitrage située au-dessus de ladite fenêtre 2 (et plus précisément sur cette figure au-dessus du trou 24 qui accueille la fenêtre 2), d'une part une feuille de verre secondaire 17' et d'autre part une feuille de matière plastique secondaire 18' qui est interposée, en contact, entre la face intermédiaire 22 et la feuille de verre secondaire 17'.

La feuille de matière plastique secondaire 18' et la feuille de verre secondaire 17' sont aussi situées de chaque côté latéral de ladite fenêtre (et plus précisément sur cette figure de chaque côté latéral du trou 24 qui accueille la fenêtre 2).

Pour une bonne tenue mécanique de ce feuilletage, la feuille de verre secondaire 17' et la feuille de matière plastique secondaire 18' sont, de préférence, au contact de ladite structure de cadre de vitrage 3 et plus particulièrement ici, à proximité du chant périphérique 23 au contact de l'entretoise périphérique 30 et à proximité du trou 24 au contact de l'entretoise interne 31.

Il a été vérifié qu'une tenue mécanique adéquate est obtenue sur la base de l'exemple des figures 5 à 8, lorsque :
- les deux substrats 10, 20 sont chacun en verre qui a subi un traitement destiné à le renforcer, tel qu'un traitement thermique et en particulier un traitement thermique de trempe et sont chacune d'une épaisseur de 3 à 8 mm, par exemple 4 mm
- la feuille verre principale 15 et les deux feuilles de verre secondaires 17, 17' sont toutes les trois en verre qui n'a subi aucun traitement destiné à le renforcer et sont chacune d'une épaisseur de 2 mm
- la feuille de matière plastique principale 16 et les deux feuilles de matière plastique secondaires 18, 18' sont toutes les trois en PVB et sont chacune d'une épaisseur de 0,76 mm

Eventuellement, la feuille verre principale 15 et les deux feuilles de verre secondaires 17, 17' peuvent être en verre qui a subi un traitement destiné à les renforcer, tel qu'un traitement thermique et en particulier un traitement thermique de trempe.

Il a été vérifié qu'une isolation thermique adéquate est obtenue sur la base de l'exemple des figures 5 à 8, lorsque ladite cavité de vitrage 4 est située tout autour de ladite fenêtre 2, d'un seul tenant, qu'elle est remplie d'argon et présente d'une part une épaisseur uniforme dans sa partie sous la fenêtre 2 et d'autre part une épaisseur uniforme dans sa partie de chaque côté et au-dessus de la fenêtre 2.

La distance entre la face extérieure 11 et la face intérieure 21 est ainsi constante et est ici de 25,76 mm.

Comme visible en figure 8, la fenêtre 2 comporte un élément verrier extérieur 40, un élément verrier intérieur 80 et une structure de cadre de fenêtre 35 qui maintient l'élément verrier extérieur 40 avec l'élément verrier intérieur 80 en réalisant une cavité de fenêtre 8 qui est ainsi située entre l'élément verrier extérieur 40 et l'élément verrier intérieur 80 :
- l'élément verrier extérieur 40 comporte deux faces principales : une face extérieure 41 qui fait face à l'espace extérieur E et une face intermédiaire 42 qui est à l'opposé de la face extérieure ; l'élément verrier extérieur 40 comporte par ailleurs un chant périphérique 43,
- l'élément verrier intérieur 80 comporte deux faces principales : une face intérieure 81 qui fait face à l'espace intérieur I et une face intermédiaire 82 qui est à l'opposé de la face intérieure ; l'élément verrier intérieur 80 comporte par ailleurs un chant périphérique 83.

Comme visible plus particulièrement sur la figure 8, la structure de cadre de fenêtre 35 comporte une entretoise de fenêtre périphérique 36 (ou « espaceur ») qui est située tout autour de la périphérie des deux éléments verriers 40, 80.

Cette entretoise de fenêtre périphérique 36 est de préférence d'un seul tenant et est ici positionnée contre les faces intermédiaires 42, 82 des éléments verriers, sans être en contact avec les chants périphériques 43, 83 de ces éléments verriers.

Cette entretoises peut être par exemple en matière plastique et/ou en métal et/ou en alliage métallique et permet de maintenir les deux éléments verriers 40, 80 à une distance constante l'un de l'autre et de créer la cavité de fenêtre 8.

La structure de cadre de fenêtre 35 comporte par ailleurs des montants horizontaux haut et bas, ainsi que des montants latéraux gauche et droit. Ces montants sont de préférence en métal ou en alliage métallique.

La structure de cadre de fenêtre 35 comporte en outre un cordon de colle périphérique 34' qui permet de coller les chants périphériques 43, 83 des éléments verriers et l'entretoise de fenêtre périphérique 36 avec les montants. Ce cordon de colle 34' est de préférence dans la même matière que le cordon de colle périphérique 34.

La face 42 de l'élément verrier extérieur qui fait face à la cavité de fenêtre 8 comporte :
- d'une part une feuille de verre de fenêtre 45
- et d'autre part une feuille de matière plastique de fenêtre 46,
- avec cette feuille de matière plastique de fenêtre 46 qui est située entre la face intermédiaire 42 et la feuille de verre de fenêtre 45,
- cette feuille de matière plastique de fenêtre 46 qui est en contact à la fois avec la face intermédiaire 42 et avec la feuille de verre de fenêtre 45,
- avec la feuille de verre de fenêtre 45 et la feuille de matière plastique de fenêtre 46 au contact de la structure de cadre de fenêtre 35 (et plus précisément ici le cordon de colle périphérique 34').

Les deux éléments verriers 40, 80 sont chacun en verre qui a subi un traitement destiné à le renforcer, tel qu'un traitement thermique et en particulier un traitement thermique de trempe et sont chacun d'une épaisseur identique respectivement aux substrats 10, 20.

La feuille de verre de fenêtre 45 présente la même épaisseur que la feuille de verre principale 15 et la feuille de matière plastique de fenêtre 46 présente la même épaisseur que la feuille de matière plastique principale 16.

La distance d entre la face extérieure 41 et la face intérieure 81 est ainsi constante et est ici de 25,76 mm ; elle est identique à la distance entre la face extérieure 11 et la face intérieure 21.

La fenêtre 2 est mobile par rapport à la structure de cadre de vitrage 3 selon un mouvement de rotation illustré par la double flèche R en figure 8, vers l'intérieur ; ce mouvement est limité à un angle d'ouverture de 45 ° environ.

Pour permettre cette ouverture, la structure de cadre de vitrage 3 comporte une traverse 38 horizontale située sous ladite fenêtre 2 qui permet au montant horizontal bas 37 de cadre de fenêtre de pivoter sur lui-même selon un axe horizontal et par rapport à la traverse 38 horizontale.

Deux poignées 29 sont prévues sur le montant supérieur de la structure de cadre de fenêtre 35 pour faciliter la préhension de la fenêtre 2 par les passagers qui souhaite l'ouvrir ou la fermer.

La traverse 38 est également de préférence en métal ou en alliage métallique et est collée à la face intérieure 21 du substrat intérieur 20 grâce au cordon de colle qui entoure les trous 14, 24.

Cette traverse 38 n'est pas en contact avec deux montants latéraux 33, 33' de la structure de cadre de vitrage 3.

Toutefois, pour cacher l'absence de feuilletage à gauche et à droite de la traverse 38 sur quelques millimètres, des caches latéraux 39, 39' sont collés sur la face intérieure 21, comme visible en figure 5. Un motif décoratif appliqué par exemple par sérigraphie sur les faces intermédiaires 12 et 22 peut aussi assurer cette fonction esthétique.

Comme visible en figure 8, le vitrage 1 selon l'invention ne comporte aucun élément saillant vers l'extérieur, au-delà de la face extérieure 11 du substrat extérieur 10.

Ainsi, pour sécuriser le vitrage et empêcher le substrat extérieur 10 (et le feuilletage 5) de tomber en cas de rupture accidentelle de ce substrat, au moins un pont de liaison 6 est prévu.

Ce pont de liaison 6 peut être situé entre la face intermédiaire 22 du substrat intérieur 20 et la face intermédiaire centrale 52 de la feuille de verre principale 15, comme illustré en figure 8.

Ce pont de liaison 6 pourrait aussi être situé :
- entre la face intermédiaire 22 du substrat intérieur 20 et la face intermédiaire centrale 62 de la feuille de matière plastique principale 16 (non illustré), ou
- entre d'une part la face intermédiaire 22 du substrat intérieur 20 et d'autre part à la fois à la face intermédiaire centrale 52 de la feuille de verre principale 15 et à la face intermédiaire centrale 62 de la feuille de de matière plastique principale 16 (non illustré).

La présente invention est décrite dans ce qui précède à titre d'exemple. Il est entendu que l'homme du métier est à même de réaliser différentes variantes de l'invention sans pour autant sortir du cadre du brevet tel que défini par les revendications.

En particulier, il est inclus dans la présente invention que le substrat intérieur 20 peut lui-même être feuilleté, avec :
- d'une part une feuille de verre accessoire
- et d'autre part une feuille de matière plastique accessoire,
- avec cette feuille de matière plastique accessoire qui est située entre la face intermédiaire 22 du substrat intérieur 20 et la feuille de verre accessoire.

Dans ce cas, bien sûr, il faut comprendre que l'expression « un bord périphérique de la face intermédiaire 22 du substrat intérieur 20 » désigne un bord périphérique de la face intermédiaire qui peut être celle de la feuille de verre accessoire et/ou celle de la feuille de matière plastique accessoire, et qui est au contact la cavité de vitrage 4.

Par ailleurs, la distance v au plus court entre le pont de liaison 6 et la structure de cadre de vitrage 3 adjacente est présentée sur les schémas comme étant plus grande que la distance t entre le feuilletage et la structure de cadre de vitrage 3, mais elle peut être identique, voire être inférieure à la distance t. L'important est que ce pont de liaison 6 soit séparé de la structure de cadre de vitrage 3 adjacente.

## Revendications

1. Vitrage (1) latéral d'un moyen de transport, en particulier vitrage de train, ledit vitrage étant un vitrage multiple, fixe, ledit vitrage comprenant :
- un substrat extérieur (10) ayant une face extérieure (11) qui fait face à un espace extérieur (E), une face intermédiaire (12) à l'opposé de la face extérieure, ainsi qu'un chant périphérique (13),
- un substrat intérieur (20) ayant une face intérieure (21) qui fait face à un espace intérieur (I), une face intermédiaire (22) à l'opposé de la face intérieure, ainsi qu'un chant périphérique (23),
- une structure de cadre de vitrage (3) qui est située en périphérie de la face intermédiaire (12) dudit substrat extérieur (10) et en périphérie de la face intermédiaire (22) dudit substrat intérieur (20) et qui tient le substrat extérieur et le substrat intérieur ensemble de telle sorte que le vitrage sépare ledit espace extérieur dudit espace intérieur avec une cavité de vitrage (4) située entre le substrat extérieur et le substrat intérieur, ladite structure de cadre de vitrage (3) comportant une entretoise périphérique (30) qui est située tout autour de la périphérie des deux substrats (10, 20),
- et un feuilletage (5) comprenant d'une part au moins une feuille de verre principale (15) et d'autre part une feuille de matière plastique principale (16), ladite feuille de matière plastique principale (16) étant située en contact entre la face intermédiaire (12) dudit substrat extérieur (10) et la feuille de verre principale (15),
***caractérisé en ce qu***'il comporte en outre au moins un pont de liaison (6) qui est séparé de ladite structure de cadre de vitrage (3) et réalise une liaison entre un bord périphérique dudit feuilletage (5) et une surface située en vis-à-vis, transversalement, de l'autre côté de ladite cavité de vitrage (4), ladite structure de cadre de vitrage (3) étant plus centrifuge que ledit pont de liaison (6).

2. Vitrage (1) selon la revendication 1, ***caractérisé en ce que*** ledit feuilletage (5) n'est pas au contact direct de ladite structure de cadre de vitrage (3) ou n'est pas lié directement mécaniquement et/ou chimiquement à ladite structure de cadre de vitrage (3).

3. Vitrage (1) selon la revendication 1 ou la revendication 2, ***caractérisé en ce que*** ledit pont de liaison (6) est continu et est séparé de ladite structure de cadre de vitrage (3) sur toute sa longueur périphérique.

4. Vitrage (1) selon la revendication 1 ou la revendication 2, ***caractérisé en ce que*** ledit pont de liaison (6) est discontinu sur sa longueur périphérique et est présent, séparé de ladite structure de cadre de vitrage (3), sur une longueur périphérique comprise entre 20 % et 95 % de la longueur périphérique dudit feuilletage (5).

5. Vitrage (1) selon l'une quelconque des revendications 1 à 4, ***caractérisé en ce que*** ledit pont de liaison (6) est situé à une distance (v) au plus court comprise entre 2,0 et 30,0 mm, et de préférence à une distance (v) au plus court comprise entre 5,0 et 20,0 mm, de ladite structure de cadre de vitrage (3).

6. Vitrage (1) selon l'une quelconque des revendications 1 à 5, ***caractérisé en ce que*** ledit pont de liaison (6) comprend un cordon de colle notamment à base de polyuréthane ou de silicone ou de MS polymère ou de polysulfide.

7. Vitrage (1) selon l'une quelconque des revendications 1 à 6, ***caractérisé en ce que*** ledit pont de liaison (6) est situé, vu de l'intérieur (I) et/ou vu de l'extérieur (E), derrière une bande de masquage (9).

8. Vitrage (1) selon l'une quelconque des revendications 1 à 7, ***caractérisé en ce que*** chaque substrat (10, 20) est en verre qui a subi un traitement chimique ou thermique destiné à le renforcer.

9. Vitrage (1) selon l'une quelconque des revendications 1 à 8, ***caractérisé en ce que*** ledit substrat extérieur (10) et ledit substrat intérieur (20) comportent chacun, dans une partie supérieure, un trou (14, 24) débouchant sur chaque face du substrat et séparé du chant périphérique du substrat, les trous des substrats étant en vis-à-vis l'un de l'autre, afin de permettre de réaliser une fenêtre (2) ouvrable, la structure de cadre de vitrage (3) maintenant en outre les deux substrats autour des trous (14, 24) et, dans une partie du vitrage située sous ladite fenêtre (2), ledit feuilletage (5) n'est pas au contact de ladite structure de cadre de vitrage (3).

10. Vitrage (1) selon la revendication 9, ***caractérisé en ce que*** ladite structure de cadre de vitrage (3) comporte une traverse (38) horizontale située sous ladite fenêtre (2), ladite traverse n'étant pas en contact avec deux montants latéraux (33, 33') de la structure de cadre de vitrage (3).

11. Vitrage (1) selon la revendications 9 ou 10, ***caractérisé en ce que*** ladite cavité de vitrage (4) est située tout autour de ladite fenêtre (2).

12. Vitrage (1) selon l'une quelconque des revendications 9 à 11, ***caractérisé en ce qu***'il ne comporte aucun élément saillant vers l'extérieur, au-delà de la face extérieure (11) du substrat extérieur (10).

## Patentansprüche

1. Seitenverglasung (1) eines Transportmittels, insbesondere Zugverglasung, wobei die Verglasung eine feste Mehrfachverglasung ist, wobei die Verglasung umfasst:
- ein äußeres Substrat (10) mit einer Außenseite (11), die einem Außenraum (E) zugewandt ist, einer Zwischenseite (12) gegenüber der Außenseite sowie einem Umfangsrand (13),
- ein inneres Substrat (20) mit einer Innenseite (21), die einem Innenraum (I) zugewandt ist, einer Zwischenseite (22) gegenüber der Innenseite sowie einem Umfangsrand (23),
- eine Verglasungsrahmenstruktur (3), die am Umfang der Zwischenfläche (12) des äußeren Substrats (10) und am Umfang der Zwischenfläche (22) des inneren Substrats (20) angeordnet ist und die das äußere Substrat und das innere Substrat derart zusammenhält, dass die Verglasung den Außenraum von dem Innenraum mit einem Verglasungshohlraum (4), der zwischen dem äußeren Substrat und dem inneren Substrat angeordnet ist, trennt, wobei die Verglasungsrahmenstruktur (3) einen Umfangsabstandshalter (30) aufweist, der um den gesamten Umfang der zwei Substrate (10, 20) angeordnet ist,
- und eine Laminierung (5), die einerseits mindestens eine Hauptglasscheibe (15) und andererseits eine Hauptkunststoffscheibe (16) umfasst, wobei die Hauptkunststoffscheibe (16) in Kontakt zwischen der Zwischenfläche (12) des äußeren Substrats (10) und der Hauptglasscheibe (15) angeordnet ist,
***dadurch gekennzeichnet, dass*** sie ferner mindestens eine Verbindungsbrücke (6) aufweist, die von der Verglasungsrahmenstruktur (3) getrennt ist und eine Verbindung zwischen einem Umfangsrand der Laminierung (5) und einer Oberfläche herstellt, die quer gegenüberliegend auf der anderen Seite des Verglasungshohlraums (4) angeordnet ist, wobei die Verglasungsrahmenstruktur (3) zentrifugaler ist als die Verbindungsbrücke (6).

2. Verglasung (1) nach Anspruch 1, ***dadurch gekennzeichnet, dass*** die Laminierung (5) nicht in direktem Kontakt mit der Verglasungsrahmenstruktur (3) steht oder mechanisch und/oder chemisch nicht direkt mit der Verglasungsrahmenstruktur (3) verbunden ist.

3. Verglasung (1) nach Anspruch 1 oder Anspruch 2, ***dadurch gekennzeichnet, dass*** die Verbindungsbrücke (6) kontinuierlich ist und von der Verglasungsrahmenstruktur (3) über ihre gesamte Umfangslänge getrennt ist.

4. Verglasung (1) nach Anspruch 1 oder Anspruch 2, ***dadurch gekennzeichnet, dass*** die Verbindungsbrücke (6) über ihre Umfangslänge diskontinuierlich ist und getrennt von der Verglasungsrahmenstruktur (3) über eine Umfangslänge zwischen 20 % und 95 % der Umfangslänge der Laminierung (5) vorliegt.

5. Verglasung (1) nach einem der Ansprüche 1 bis 4, ***dadurch gekennzeichnet, dass*** die Verbindungsbrücke (6) in einem kürzesten Abstand (v) zwischen 2,0 und 30,0 mm, und vorzugsweise in einem kürzesten Abstand (v) zwischen 5,0 und 20,0 mm, von der Verglasungsrahmenstruktur (3) angeordnet ist.

6. Verglasung (1) nach einem der Ansprüche 1 bis 5, ***dadurch gekennzeichnet, dass*** die Verbindungsbrücke (6) einen Klebstoffstreifen insbesondere auf der Basis von Polyurethan oder Silikon oder MS-Polymer oder Polysulfid umfasst.

7. Verglasung (1) nach einem der Ansprüche 1 bis 6, ***dadurch gekennzeichnet, dass*** die Verbindungsbrücke (6) von innen (I) und/oder von außen (E) gesehen hinter einem Maskierungsstreifen (9) angeordnet ist.

8. Verglasung (1) nach einem der Ansprüche 1 bis 7, ***dadurch gekennzeichnet, dass*** jedes Substrat (10, 20) aus Glas besteht, das einer chemischen oder thermischen Behandlung unterzogen wurde, um es zu verstärken.

9. Verglasung (1) nach einem der Ansprüche 1 bis 8, ***dadurch gekennzeichnet, dass*** das äußere Substrat (10) und das innere Substrat (20) jeweils in einem oberen Teil ein Loch (14, 24) aufweisen, das sich auf jeder Seite des Substrats öffnet und von dem Umfangsrand des Substrats getrennt ist, wobei die Löcher der Substrate einander gegenüberliegen, um zu ermöglichen, dass das zu öffnende Fenster (2) realisiert werden kann, wobei die Verglasungsrahmenstruktur (3) ferner die zwei Substrate um die Löcher (14, 24) hält und in einem Teil der Verglasung, der unter dem Fenster (2) angeordnet ist, die Laminierung (5) nicht in Kontakt mit der Verglasungsrahmenstruktur (3) steht.

10. Verglasung (1) nach Anspruch 9, ***dadurch gekennzeichnet, dass*** die Verglasungsrahmenstruktur (3) einen horizontalen Querträger (38) umfasst, der unter dem Fenster (2) angeordnet ist, wobei der Querträger nicht in Kontakt mit zwei seitlichen Stützen (33, 33') der Verglasungsrahmenstruktur (3) steht.

11. Verglasung (1) nach Anspruch 9 oder 10, ***dadurch gekennzeichnet, dass*** der Verglasungshohlraum (4) um das Fenster (2) angeordnet ist.

12. Verglasung (1) nach einem der Ansprüche 9 bis 11, ***dadurch gekennzeichnet, dass*** sie über die Außenfläche (11) des äußeren Substrats (10) hinaus kein nach außen vorstehendes Element aufweist.

## Claims

1. A side glazing (1) for a means of transport, particularly glazing for a train, said glazing being fixed multiple glazing, said glazing comprising:
- an exterior substrate (10) having an exterior face (11) which faces an exterior space (E), an intermediate face (12) on the opposite side to the exterior face, and a peripheral edge face (13),
- an interior substrate (20) having an interior face (21) which faces an interior space (I), an intermediate face (22) on the opposite side to the interior face, and a peripheral edge face (23),
- a glazing frame structure (3) which is situated at the periphery of the intermediate face (12) of said exterior substrate (10) and at the periphery of the intermediate face (22) of said interior substrate (20) and which holds the exterior substrate and the interior substrate together in such a way that the glazing separates said exterior space from said interior space with a glazing cavity (4) situated between the exterior substrate and the interior substrate, said glazing frame structure (3) comprising a peripheral spacing piece (30) which is situated all around the periphery of the two substrates (10, 20),
- and a lamination (5) comprising, on the one hand, at least one main sheet of glass (15) and, on the other hand, a main sheet of plastic (16), said main sheet of plastic (16) being situated in contact between the intermediate face (12) of said exterior substrate (10) and the main sheet of glass (15),
***characterized in that*** it further comprises at least one connecting bridge (6) which is separate from said glazing frame structure (3) and makes a connection between a peripheral edge of said lamination (5) and a surface, situated transversely opposite, on the other side of said glazing cavity (4), the glazing frame structure (3) being more centrifugal than said connecting bridge (6).

2. The glazing (1) as claimed in claim 1, ***characterized in that*** said lamination (5) is not in direct contact with said glazing frame structure (3) or is not directly mechanically connected and/or chemically bonded to said glazing frame structure (3).

3. The glazing (1) as claimed in claim 1 or claim 2, ***characterized in that*** said connecting bridge (6) is continuous and is separated from said glazing frame structure (3) over its entire peripheral length.

4. The glazing (1) as claimed in claim 1 or claim 2, ***characterized in that*** said connecting bridge (6) is discontinuous over its peripheral length and is present, separated from said glazing frame structure (3), over a peripheral length of between 20% and 95% of the peripheral length of said lamination (5).

5. The glazing (1) as claimed in any one of claims 1 to 4, ***characterized in that*** said connecting bridge (6) is situated at a distance (v) which, at the shortest, is between 2.0 and 30.0 mm, and preferably at a distance (v) which, at the shortest, is between 5.0 and 20.0 mm, away from said glazing frame structure (3).

6. The glazing (1) as claimed in any one of claims 1 to 5, ***characterized in that*** said connecting bridge (6) comprises a bead of adhesive, in particular one based on polyurethane or on silicone or on MS polymer or on polysulfide.

7. The glazing (1) as claimed in any one of claims 1 to 6, ***characterized in that*** said connecting bridge (6) is situated, when viewed from the interior (I) and/or when viewed from the exterior (E), behind a masking strip (9).

8. The glazing (1) as claimed in any one of claims 1 to 7, ***characterized in that*** each substrate (10, 20) is made of a glass that has undergone a chemical or heat treatment aimed at strengthening it.

9. The glazing (1) as claimed in any one of claims 1 to 8, ***characterized in that*** said exterior substrate (10) and said interior substrate (20) each comprise, in an upper part, a hole (14, 24) opening onto each face of the substrate and separated from the peripheral edge face of the substrate, the holes in the substrates facing one another so as to allow the creation of an opening window (2), the glazing frame structure (3) furthermore holding the two substrates around the holes (14, 24) and, in a part of the glazing that is situated under said window (2), said lamination (5) is not in contact with said glazing frame structure (3).

10. The glazing (1) as claimed in claim 9, ***characterized in that*** said glazing frame structure (3) comprises a horizontal crossmember (38) situated underneath said window (2), said crossmember not being in contact with two lateral uprights (33, 33') of the glazing frame structure (3).

11. The glazing (1) as claimed in claim 9 or 10, ***characterized in that*** said glazing cavity (4) is situated all around said window (2).

12. The glazing (1) as claimed in any one of claims 9 to 11, ***characterized in that*** it does not comprise any element that projects toward the exterior beyond the exterior face (11) of the exterior substrate (10).
